# EUROPÄISCHE PATENTSCHRIFT

(11) **EP 0 965 870 B1**
(45) Veröffentlichungstag und Bekanntmachung des Hinweises auf die Patenterteilung: **11.09.2002**
(21) Anmeldenummer: 99105779.5
(22) Anmeldetag: 22.03.1999
(51) Int. Cl.: G02B 6/44

(54) **Zylindrische Kabelmuffe mit tangentialen Kabeleinführungen**
Cylindrical cable sleeve with tangential cable inlets
Manchon de câble cylindrique avec entrées de cable tangentielles

(30) Priorität: 15.06.1998 DE 19826586
(43) Veröffentlichungstag der Anmeldung: 22.12.1999
(73) Patentinhaber: CCS Technology, Inc., Wilmington, DE 19803 (US)
(72) Erfinder: Schröder, Günter, 82140 Esting (DE); Weber, Günther, 84508 Burgkirchen (DE)
(74) Vertreter: Sturm, Christoph, Dipl.-Ing.

(56) Entgegenhaltungen:
- WO-A-97/26574
- DE-C- 4 315 642
- PATENT ABSTRACTS OF JAPAN vol. 1998, no. 01, 30. Januar 1998 (1998-01-30) & JP 09 242088 A (OIKE:KK), 16. September 1997 (1997-09-16)
- PATENT ABSTRACTS OF JAPAN vol. 1998, no. 08, 30. Juni 1998 (1998-06-30) & JP 10 084621 A (OIKE:KK), 31. März 1998 (1998-03-31)
- PATENT ABSTRACTS OF JAPAN vol. 1999, no. 03, 31. März 1999 (1999-03-31) & JP 10 336846 A (HANEDA HUME PIPE CO LTD), 18. Dezember 1998 (1998-12-18)

## Beschreibung

Die Erfindung betrifft eine zylindrische Kabelmuffe, die einen Muffenboden, eine zylindrische Wand mit tangentialen Kabeleinführungen für Lichtwellenleiter-Kabel und eine Muffenöffnung aufweist.

Aus WO 97/26574 ist eine zylindrische Kabelmuffe für Lichtwellenleiter-Kabel bekannt, wobei die Kabeleinführungen senkrecht zur Kabelmuffenachse angeordnet sind. Besonders zweckmäßig ist, die Kabeleinführungen in Form von Rohransätzen tangential an den Muffenkörper anzusetzen, da dann die eingeführten Lichtwellenleiter problemlos weitergeführt werden können. Die Ablage von Lichtwellenleiter-Überlängen erfolgt in Schlaufenform und für die Kabelspleiße sind Spleißkassetten vorgesehen, die nach oben herausgenommen werden können.

Weiterhin sind aus DE 41 06 171 - AI Kassetten und Kassettenblöcke für Lichtwellenleiter bekannt, die in herkömmlichen Kabelmuffen eingesetzt werden. Auf diesen Kassetten werden die Überlängen der Lichtwellenleiter ringförmig geführt und die Spleiße werden in Spleißhaltern abgelegt.

Aufgabe vorliegender Erfindung ist, die Ablage von Lichtwellenleiter-Überlängen und Lichtwellenleiter-Spleißen übersichtlicher zu gestalten und die Handhabung bei Servicearbeiten zu verbessern. Die gestellte Aufgabe wird mit einer Kabelmuffe der eingangs erläuterten Art dadurch gelöst, daß Etageneinsätze zur Ablage von Lichtwellenleitern an der zylindrischen Innenwandung der Kabelmuffe entlang von Mantellinien parallel zur Achsrichtung der zylindrischen Kabelmuffe angeordnet sind, daß die Etageneinsätze mehrere in Achsrichtung übereinanderliegende Fächer aufweisen, daß ein Spleißkammhalter mit in Achsrichtung übereinander liegenden Spleißkammfächern nahe oder an der Innenwandung angeordnet ist, daß Spleißkämme herausnehmbar in den Spleißkammfächern fixiert sind, daß die Lichtwellenleiter-Kabel in den tangentialen Kabeleinführungen einführbar sind, daß die Kabeleinführungen mit den eingeführten Lichtwellenleiter-Kabeln abdichtbar sind und daß die Lichtwellenleiter in den Fächern der Etageneinsätze in zusammengehörigen Gruppen ablegbar sind.

Durch die Ausführungsbeispiele gemäß der Erfindung ergeben sich gegenüber dem Stand der Technik besonders Vorteile darin, daß keine speziellen Baueinheiten mit entsprechenden Schwenk- oder Schiebevorrichtungen benötigt werden und daß sich auch die Servicearbeiten in einfacher und übersichtlicher Weise durchführen lassen. Hierfür sind an der Innenwandung der zylindrischen Kabelmuffe entlang von Mantellinien lediglich Etageneinsätze in Form von regalähnlichen, jedoch schmalen Fächern vorgesehen, in welche die Lichtwellenleiter der eingeführten Lichtwellenleiter-Kabel in Kreisform mit entsprechenden Überlängen abgelegt werden. Dabei werden die Lichtwellenleiter in einzelnen Fächern nach geeigneten Gruppen sortiert eingebracht, so daß sich trotz der Einfachheit eine hervorragende Übersichtlichkeit ergibt. Außerdem sind zum Beispiel für jede Gruppe Spleißkämme vorgesehen, die in Spleißkammfächern eines Spleißkammhalters fixierend eingesetzt werden, so daß auch die Spleiße in übersichtlicher Weise und nach Gruppen getrennt organisiert sind. Auf einem Spleißkamm sind jeweils die vorgesehenen Spleiße eingelegt und fixiert. Die übersichtliche Ablage der Lichtwellenleiter mit ihren Überlängen in den Fächern der Etageneinsätze erlauben die Entnahme eines Spleißkammes für erforderliche Servicearbeiten in einfachster Weise. Besonders einfach ist auch die Einführung der Lichtwellenleiter, da sie infolge der tangential angelegten Kabeleinführungen ohne Gefahr sofort in unkritischer Weise in die Fächer der Etageneinsätze weitergeführt werden können. Die rohrförmigen oder flanschartigen Kabeleinführungseinheiten gemäß der Erfindung eignen sich besonders für Lichtwellenleiter-Kabel, insbesondere für sogenannte Mikrokabel, die aus einem Rohr bestehen, in das die Lichtwellenleiter lose eingebracht sind. Diese Lichtwellenleiter-Kabel lassen sich in besonders einfacher Weise an den Kabelmuffeneingängen abdichten, zum Beispiel mit Hilfe von Schrumpfschlauchstücken oder durch Krimpverbindungen. Bei den Krimpverbindungen wird z.B. das Rohr eines Mikrokabels in den Rohransatz eines angesetzten Flansches eingeführt. Anschließend wird der Rohransatz rundum dicht auf das eingeführte Rohr aufgepreßt.

Bei Ausführungsbeispielen gemäß der Erfindung mit tangential angesetzten Flanschen ergibt sich auch die Möglichkeit durch Längsteilung der Flansche und durch geschlitzte Einführungsöffnungen in der Wandung der Kabelmuffe ungeschnittene Lichtwellenleiter ein- bzw. durchzuführen. Die Kabelmuffe wird mit einem einfach zu handhabenden Deckel dicht abgeschlossen. Bei Ausführungsbeispielen von Kabelmuffen mit angesetzten Flanschen kann der Deckel auch über die Flansche hinweg greifen, wobei dann die separate Abdeckung des längsgeteilten Flansches überflüssig ist.

Die Erfindung wird nun anhand von sechs Figuren näher erläutert.
- Figur 1: zeigt die geöffnete Kabelmuffe in Draufsicht.
- Figur 2: zeigt einen Schnitt durch die Kabelmuffe.
- Figur 3: verdeutlicht einen Etageneinsatz mit verschieden breiten Fächern.
- Figur 4: zeigt eine Ansicht auf einen an die Kabelmuffe tangential angesetzten Flansch.
- Figur 5: zeigt einen angesetzten Flansch in stirnseitiger Ansicht.
- Figur 6: zeigt einen angesetzten Flansch in Draufsicht.

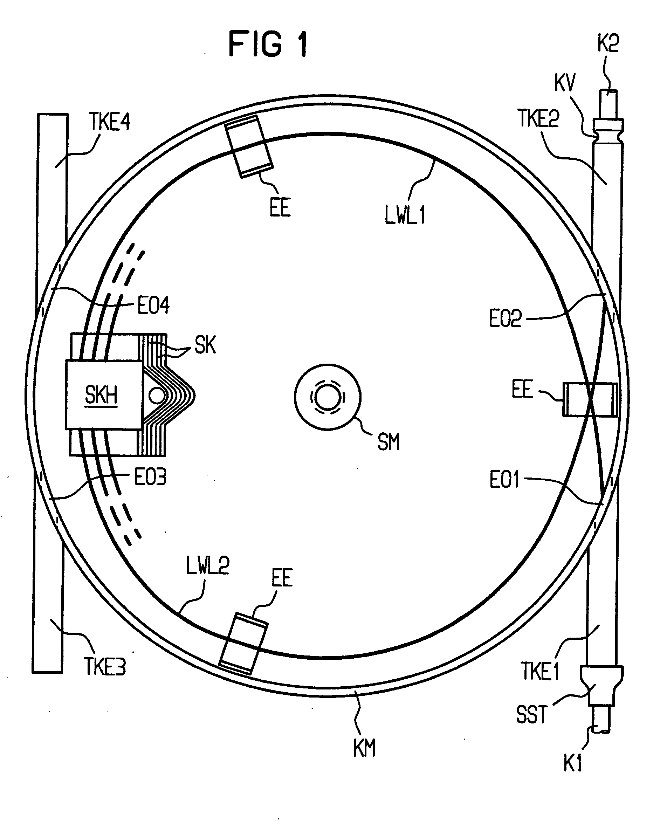

Die Figur 1 zeigt als Ausführungsbeispiel gemäß der Erfindung eine geöffnete Kabelmuffe KM, in der am inneren Umfang entlang von Mantellinien mehrere Etageneinsätze EE angeordnet sind, in denen die Lichtwellenleiter von eingeführten Lichtwellenleiter-Kabeln K1 und K2 angeordnet werden und zwar - was hier nicht erkennbar ist - nach zweckmäßigen Gruppen verteilt in mehreren übereinander liegenden Fächern der Etageneinsätze EE. Der Verlauf von zwei miteinander verspleißten Lichtwellenleitern LW1 und LW2 ist aufgezeigt, wobei der Spleiß in einem Spleißkamm SK fixiert ist. Entsprechend der Gruppenaufteilung der Lichtwellenleiter sind mehrere solche Spleißkämme vorhanden, die in übersichtlicher Weise in Spleißkammfächern eines Spleißkammhalters SKH fixiert sind. Bei Servicearbeiten kann der gewünschte Spleißkamm entnommen werden und aufgrund der ringsum in den Etageneinsätzen EE gelagerten Lichtwellenleiter-Überlängen aus der Kabelmuffe KM herausgenommen werden. An der Kabelmuffe KM sind hier tangentiale Kabeleinführungen TKE1 bis TKE4 in Form von Rohransätzen angebracht, die in Einführungsöffnungen E01 bis E04 des eigentlichen Muffenkörpers münden. Weiterhin ist angedeutet, daß die Abdichtung der Einführungsöffnungen an den Rohransätzen der tangentialen Kabeleinführungen zum Beispiel mit Hilfe eines Schrumpfschlauchstückes SST oder bei der Einführung von Kabeln mit Metallrohren, sogenannten Mikrokabeln K2, durch Krimpverbindungen KV erfolgen kann. Im Zentrum der Kabelmuffe KM befindet sich eine Schließmutter SM, zur Aufnahme einer Schließschraube, mit der der Deckel der Kabelmuffe dicht aufgesetzt wird.

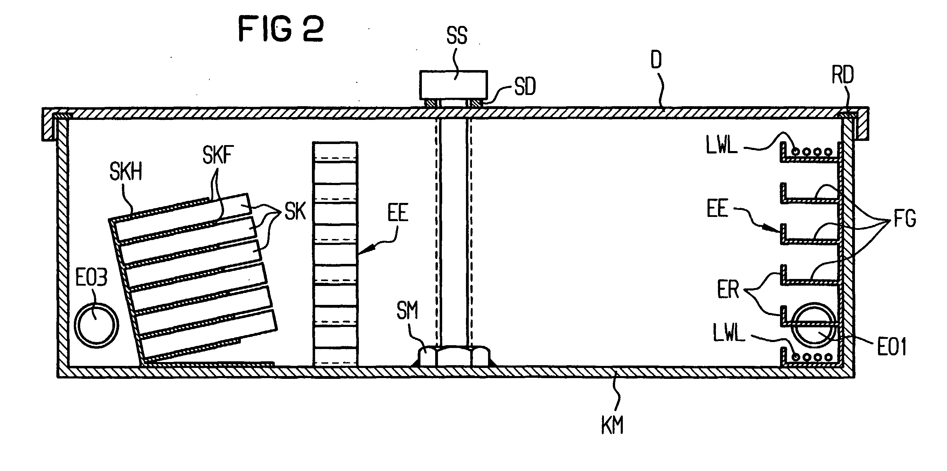

Figur 2 vermittelt in einer Schnittdarstellung die Anordnung und Ausbildung der Etageneinsätze EE innerhalb der Kabelmuffe KM, die mit einem Deckel D, einer umlaufenden Dichtung RD und einer Schließschraube SS mit Dichtung SD abgeschlossen wird. Die hier gezeigten Etageneinsätze EE sind regalartig aufgebaut, so daß mehrere übereinander liegende Fächer FG gleicher Ausladung gebildet sind. Die freien Enden sind mit hochgezogenen Rändern ER versehen, um selbständiges Herausfallen von Lichtwellenleitern zu verhindern. In den Fächern FG sind eingelegte Lichtwellenleiter LWL angedeutet. Weiterhin sind die Einführungsöffnungen E01 und E03 des Muffengehäuses angedeutet, durch die die Lichtwellenleiter eingeführt werden. In den Spleißkammfächern SKF des Spleißkammhalters SKH werden die Spleißkämme SK übereinander liegend aufgenommen, von wo sie einzeln entnommen werden können. Der Spleißkammhalter ist nach oben geneigt, um die Herausnahme einzelner Spleißkämme SK zu erleichtern.

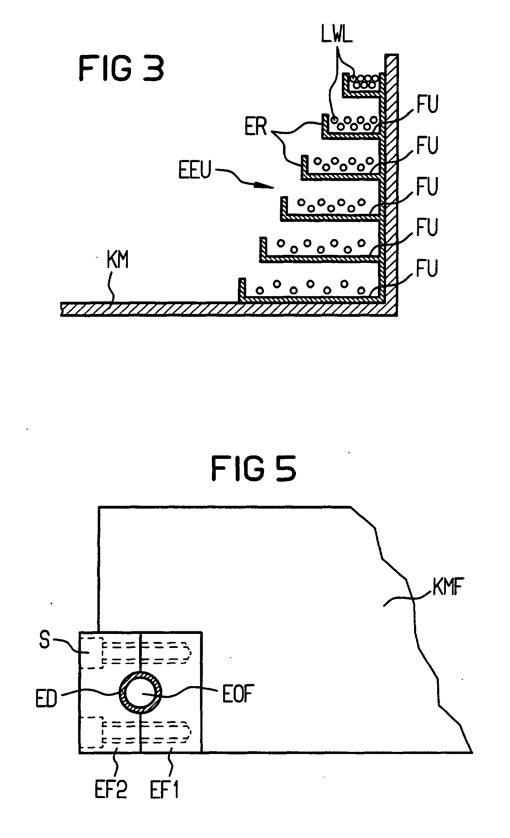

In Figur 3 ist in einer Kabelmuffe KM ein Etageneinsatz EEU mit verschieden tiefen Fächern FU gezeigt, wobei zweckmäßigerweise das unterste Fach FU die größte Ausladung aufweist. Es sind hier ebenfalls hochstehende Ränder ER vorgesehen, damit die Lichtwellenleiter LWL nicht herausfallen. Der Spleißkammhalter ist nach oben geneigt, um die Herausnahme einzelner Spleißkämme SK zu erleichtern.

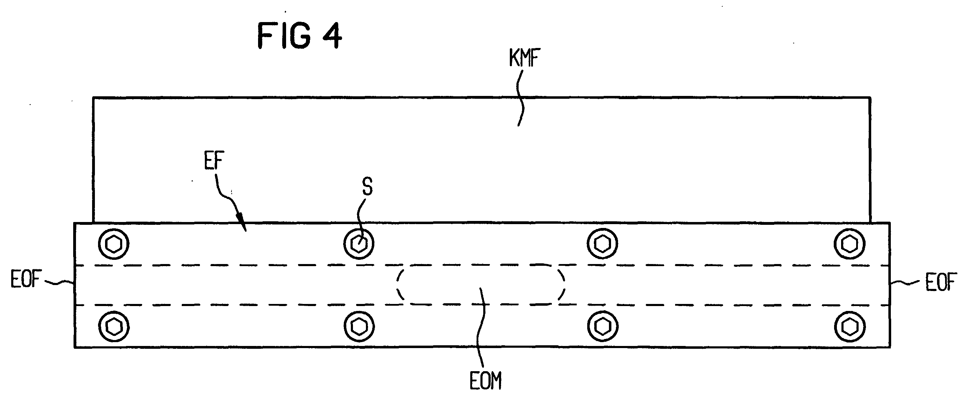

Bei der Ausführungsform einer Kabelmuffe KMF nach Figur 4 sind die tangentialen Kabeleinführungen als Einführungsflansch EF ausgebildet mit zwei gegenüber liegenden Kabeleinführungsöffnungen EOF. In der Mitte des Einführungsflansches EF ist eine Einführungsöffnung EOM in die Kabelmuffe KMF angedeutet. Der längsgeteilte Flansch EF hat den Vorteil, daß bei abgenommener Flanschhälfte die vom Kabelmantel befreiten Lichtwellenleiter besser und montagefreundlicher eingeführt werden können. Nach Abschluß der Einführungsarbeiten werden die Dichtungen an den Einführungsöffnungen EOF eingelegt und die zweite Flanschhälfte mittels Schließschrauben S zur Dichtung aufgesetzt.

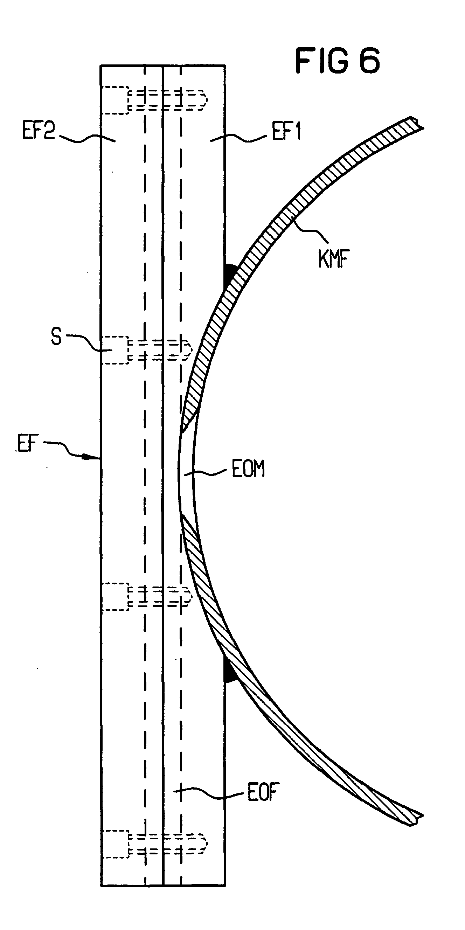

Die Figur 5 vermittelt die Anordnung eines angesetzten Einführungsflansches, bestehend aus den beiden Flanschhälften EF1 und EF2, wobei in der Einführungsöffnung EOF des Flansches die Einführungsdichtung ED erkennbar ist. Mit den Schließschrauben S erfolgt der Abschluß der gesamten Einführungseinheit, die an der Kabelmuffe KMF angesetzt ist.

Die Figur 6 vermittelt eine Draufsicht auf eine Kabelmuffe KMF im Teilschnitt und einen angesetzten Einführungsflansch EF. Dabei ist erkennbar, daß die Einführungsöffnung EOF in der Mitte in eine Einführungsöffnung EOM der Kabelmuffe mündet. Weiterhin geht aus dieser Figur hervor, daß der Einführungsflansch EF in zwei Einführungsflanschhälften EF1 und EF2 längsgeteilt ist, wobei die eine Hälfte EF1 direkt an der Kabelmuffe angesetzt ist. Die zweite Hälfte EF2 wird nach Einführung der Kabel und Einführung der Dichtungen mit Schließschrauben S dicht angeklemmt.

Wenn der Einführungsflansch EF1 - EF2 am oberen Ende der Kabelmuffe KMF angeordnet ist, kann die Einführungsöffnung EOM der Kabelmuffe KMF nach oben geschlitzt werden. Dadurch ist auch die Ein- bzw. Durchführung ungeschnittener Lichtwellenleiter möglich. Die Abdichtung erfolgt in einem solchen Fall zweckmäßigerweise mit einem übergreifenden Deckel.

## Patentansprüche

1. Zylindrische Kabelmuffe, die einen Muffenboden, eine zylindrische Wand mit tangentialen Kabeleinführungen für Lichtwellenleiter-Kabel und eine Muffenöffnung aufweist, **dadurch gekennzeichnet, daß** Etageneinsätze (EE, EEU) zur Ablage von Lichtwellenleitern an der zylindrischen Innenwandung der Kabelmuffe (KM, KMF) entlang von Mantellinien parallel zur Achsrichtung der zylindrischen Kabelmuffe angeordnet sind, daß die Etageneinsätze (EE, EEU) mehrere in Achsrichtung übereinanderliegende Fächer (FG, FU) aufweisen, daß ein Spleißkammhalter (SKH) mit in Achsrichtung übereinander liegenden Spleißkammfächern (SKF) nahe oder an der Innenwandung angeordnet ist, daß Spleißkämme (SK) herausnehmbar in den Spleißkammfächern (SKF) befestigt sind, daß die Lichtwellenleiter-Kabel (K1, K2) in den tangentialen Kabeleinführungen (TKE1, TKE2, EF) einführbar sind, daß die Kabeleinführungen mit den eingeführten Lichtwellenleiter-Kabeln abdichtbar sind und daß die Lichtwellenleiter (LWL) in den Fächern (FG, FU) der Etageneinsätze (EE, EEU) in zusammengehörigen Gruppen ablegbar sind.

2. Zylindrische Kabelmuffe nach Anspruch 1, **dadurch gekennzeichnet, daß** die Fächer (FG) der Etageneinsätze (EE) auf deren von der Innenwandung abgewandten Seite zur Muffenöffnung hin hochgezogene Ränder (ER) aufweisen und radial gleich weit ausladend sind.

3. Zylindrische Kabelmuffe nach Anspruch 1, **dadurch gekennzeichnet, daß** die Fächer (FU) der Etageneinsätze (EEU) auf deren von der Innenwandung abgewandten Seite zur Muffenöffnung hin hochgezogene Ränder (ER) aufweisen und radial verschieden weit ausladend sind, wobei deren Ausladungen zum Muffenboden hin zunehmen.

4. Zylindrische Kabelmuffe nach einem der vorhergehenden Ansprüche, **dadurch gekennzeichnet, daß** der Spleißkammhalter (SKH) mit den Öffnungen seiner Spleißkammfächer (SKF) zur Muffenöffnung nach oben geneigt ist.

5. Zylindrische Kabelmuffe nach einem der vorhergehenden Ansprüche, **dadurch gekennzeichnet, daß** die Kabelmuffe (KM, KMF) durch einen kreisförmigen Deckel (D) mit umlaufender Dichtung (RD) mittels einer zentralen Schließschraube (SS) dicht abschließbar ist.

6. Kabelmuffe nach einem der vorhergehenden Ansprüche, **dadurch gekennzeichnet, daß** die tangentialen Kabeleinführungen (TKE1, TKE2) als Rohransätze ausgebildet sind, an deren äußeren Enden Dichtungen zu den eingeführten Lichtwellenleiter-Kabeln (K1,K2), vorzugsweise Mikrokabeln aus einem Rohr und lose darin geführten Lichtwellenleitern, herstellbar sind.

7. Zylindrische Kabelmuffe nach Anspruch 6, **dadurch gekennzeichnet, daß** die Dichtungen mittels Schrumpfschlauchstücken (SST) hergestellt sind.

8. Zylindrische Kabelmuffe nach Anspruch 6, **dadurch gekennzeichnet, daß** die Dichtungen durch eine Krimpverbindung (KV) hergestellt sind.

9. Zylindrische Kabelmuffe nach einem der Ansprüche 1 bis 5, **dadurch gekennzeichnet, daß** die tangentialen Kabeleinführungen durch mindestens einen außen an der Muffenwandung angesetzten Einführungsflansch (EF) gebildet sind, wobei die Einführung der Lichtwellenleiter in die Kabelmuffe (KMF) durch eine Einführungsöffnung (EOM) in der Muffenwandung und die Abdichtungen mit Einführungsdichtungen (ED) an den äußeren Enden des Einführungsflansches (EF) erfolgt.

10. Zylindrische Kabelmuffe nach Anspruch 9, **dadurch gekennzeichnet, daß** der Einführungsflansch (EF) in der Einführungsebene in zwei Flanschhälften (EF1, EF2) längsgeteilt ist.

11. Zylindrische Kabelmuffe nach Anspruch 10, **dadurch gekennzeichnet, daß** der Einführungsflansch (EF) am muffenöffnungsseitigen Rand der Kabelmuffe (KMF) angesetzt ist und daß die Einführungsöffnung (EOM) der Kabelmuffe (KMF) zur Muffenöffnung hin geschlitzt ist.

12. Zylindrische Kabelmuffe nach Anspruch 11, **dadurch gekennzeichnet, daß** der Deckel (D) der Kabelmuffe (KMF) auch den Einführungsflansch (EF) dichtend überdeckt.

## Claims

1. Cylindrical cable junction box, which has a junction box base, a cylindrical wall with tangential cable lead-ins for fibre-optic cables and a junction box opening, **characterized in that** tray inserts (EE, EEU) for depositing optical waveguides are arranged on the cylindrical inner wall of the cable junction box (KM, KMF) along generatrices parallel to the axial direction of the cylindrical cable junction box, **in that** the tray inserts (EE, EEU) have a plurality of compartments (FG, FU) lying one above the other in the axial direction, **in that** a splicing comb holder (SKH) with splicing comb compartments (SKF) lying one above the other in the axial direction is arranged near or on the inner wall, **in that** splicing combs (SK) are removably fastened in the splicing comb compartments (SKF), **in that** the fibre-optic cables (K1, K2) can be inserted into the tangential cable lead-ins (TKE1, TKE2, EF), **in that** the cable lead-ins with the fibre-optic cables inserted can be sealed and **in that** the optical waveguides (LWL) can be deposited in associated groups in the compartments (FG, FU) of the tray inserts (EE, EEU).

2. Cylindrical cable junction box according to Claim 1, **characterized in that** the compartments (FG) of the tray inserts (EE) have on their side facing away from the inner wall edges (ER) drawn up towards the junction box opening and project radially to the same extent.

3. Cylindrical cable junction box according to Claim 1, **characterized in that** the compartments (FU) of the tray inserts (EEU) have on their side facing away from the inner wall edges (ER) drawn up towards the junction box opening and project radially to different extents, the extents of their projection increasing towards the base of the junction box.

4. Cylindrical cable junction box according to one of the preceding claims, **characterized in that** the splicing comb holder (SKH) is inclined with the openings of its splicing comb compartments (SKF) facing upwards towards the opening of the junction box.

5. Cylindrical cable junction box according to one of the preceding claims, **characterized in that** the cable junction box (KM, KMF) can be closed off in a sealed manner by a circular cover (D) with a peripheral seal (RD) by means of a central closing screw (SS).

6. Cable junction box according to one of the preceding claims, **characterized in that** the tangential cable lead-ins (TKE1, TKE2) are designed as tube attachments, on the outer ends of which seals can be produced with respect to the inserted fibre-optic cables (K1, K2), preferably micro-cables comprising a tube and optical waveguides loosely guided therein.

7. Cylindrical cable junction box according to Claim 6, **characterized in that** the seals are produced by means of pieces of shrink tubing (SST).

8. Cylindrical cable junction box according to Claim 6, **characterized in that** the seals are produced by a crimp connection (KV).

9. Cylindrical cable junction box according to one of Claims 1 to 5, **characterized in that** the tangential cable lead-ins are formed by at least one lead-in flange (EF) attached to the outside of the junction box wall, the insertion of the optical waveguides into the cable junction box (KMF) taking place through a lead-in opening (EOM) in the junction box wall and the seals being provided by lead-in seals (ED) on the outer ends of the lead-in flange (EF).

10. Cylindrical cable junction box according to Claim 9, **characterized in that** the lead-in flange (EF) is longitudinally divided in the lead-in plane into two flange halves (EF1, EF2).

11. Cylindrical cable junction box according to Claim 10, **characterized in that** the lead-in flange (EF) is attached to the edge of the cable junction box (KMF) on the side of the junction box opening and **in that** the lead-in opening (EOM) of the cable junction box (KMF) is slit towards the junction box opening.

12. Cylindrical cable junction box according to Claim 11, **characterized in that** the cover (D) of the cable junction box (KMF) also covers the lead-in flange (EF) in a sealing manner.

## Revendications

1. Manchon de câble cylindrique présentant un fond de manchon, une paroi cylindrique avec des entrées de câble tangentielles pour câbles à fibres optiques et une ouverture de manchon, **caractérisé en ce que** les inserts à étages (EE, EEU) pour la pose de fibres optiques sont disposés contre la paroi interne cylindrique du manchon de câble (KM, KMF) le long de génératrices parallèles à la direction axiale du manchon de câble cylindrique, **en ce que** les inserts à étages (EE, EEU) présentent dans le sens axial plusieurs compartiments superposés (FG, FU), **en ce qu'**un support (SKH) de peignes d'épissure présentant des compartiments à peigne d'épissure (SK) superposés dans le sens axial est disposé à proximité de ou contre la paroi interne, **en ce que** des peignes d'épissure (SK) sont fixés dans des compartiments à peigne d'épissure (SKF) de manière à pouvoir en être extraits, **en ce que** les câbles (K₁, K₂) à fibres optiques peuvent être introduits dans les entrées de câble tangentielles (TKE₁, TKE₂, EF), **en ce que** les entrées de câble avec les câbles à fibres optiques introduits peuvent être étanchées **en ce que** les fibres optiques (LWL) peuvent être posées dans les compartiments (FG, FU) des inserts à étages (EE, EEU) en des groupes de même type.

2. Manchon de câble cylindrique selon la revendication 1, **caractérisé en ce que** les compartiments (FG) des inserts à étages (EE) présentent sur leur côté opposé à la paroi interne des bords (ER) relevés vers l'ouverture du manchon et sont d'égale largeur dans le sens radial.

3. Manchon de câble cylindrique selon la revendication 1, **caractérisé en ce que** les compartiments (FU) des inserts à étages (EEU) présentent sur leur côté opposé à la paroi interne des bords (ER) relevés vers l'ouverture du manchon, et sont de largeur différente dans le sens radial, leurs largeurs augmentant vers le fond du manchon.

4. Manchon de câble cylindrique selon l'une quelconque des revendications précédentes, **caractérisé en ce que** le support de peignes d'épissure (SKH) est incliné avec les ouvertures de ses compartiments de peigne d'épissure (SKF) tournés vers le haut en direction de l'ouverture du manchon.

5. Manchon de câble cylindrique selon l'une quelconque des revendications précédentes, **caractérisé en ce que** le manchon de câble (KM, KMF) peut être fermé de façon étanche par un couvercle (D) de forme circulaire présentant un joint (RD) circonférentiel, au moyen d'une vis centrale de fermeture (SS).

6. Manchon de câble selon l'une quelconque des revendications précédentes, **caractérisé en ce que** les entrées de câble tangentielles (TKE₁, TKE₂) sont conformées comme des embouts tubulaires sur les extrémités extérieures desquels des dispositifs d'étanchéité par rapport aux câbles à fibres optiques (K₁, K₂), de préférence des microcâbles d'un tube et des fibres optiques qui ont été guidées de façon non attachée, peuvent être fabriqués.

7. Manchon de câble cylindrique selon la revendication 6, **caractérisé en ce que** les dispositifs d'étanchéité sont fabriqués au moyen de morceaux de tuyau flexible rétractable (SST).

8. Manchon de câble cylindrique selon la revendication 6, **caractérisé en ce que** les dispositifs d'étanchéité sont fabriqués par une liaison par retrait (KV).

9. Manchon de câble cylindrique selon l'une quelconque des revendications 1 à 5, **caractérisé en ce que** les entrées de câble tangentielles sont formées par au moins une bride d'introduction (EF) placée contre la paroi extérieure du manchon, l'introduction des fibres optiques dans le manchon de câble (KMF) s'effectuant à travers une ouverture d'introduction (EOM) dans la paroi du manchon et à travers les dispositifs d'étanchéité avec des joints d'introduction (ED) sur les extrémités extérieures de la bride d'introduction (EF).

10. Manchon de câble cylindrique selon la revendication 9, **caractérisé en ce que** la bride d'introduction (EF) est divisée sur sa longueur dans le plan d'introduction en deux moitiés de bride (EF₁, EF₂).

11. Manchon de câble cylindrique selon la revendication 10, **caractérisé en ce que** la bride d'introduction (EF) est placée contre le bord du manchon de câble (KMF) situé du côté de l'ouverture du manchon et **en ce que** l'ouverture d'introduction (EOM) du manchon de câble (KMF) est fendue vers l'ouverture du manchon.

12. Manchon de câble cylindrique selon la revendication 11, **caractérisé en ce que** le couvercle (D) du manchon de câble (KMF) recouvre également la bride d'introduction (EF) de façon étanche.
